# EUROPEAN PATENT SPECIFICATION

(11) **EP 3 797 970 B1**
(45) Date of publication and mention of the grant of the patent: **09.08.2023**
(21) Application number: 19839635.0
(22) Date of filing: 12.11.2019
(51) Int. Cl.: B29C 64/10, B29C 64/35, B29C 64/379, B33Y 10/00, B33Y 30/00

(54) **MACHINE AND SYSTEM FOR AUTOMATED ADDITIVE MANUFACTURING**
MÁQUINA Y SISTEMA DE FABRICACIÓN ADITIVA AUTOMATIZADO
MACHINE ET SYSTÈME DE FABRICATION ADDITIVE AUTOMATISÉ

(30) Priority: 12.11.2018 ES 201831094
(43) Date of publication of application: 31.03.2021
(73) Proprietor: Triditive, S.L., 332100 Gijón (ES)
(72) Inventor: DÍAZ CASTRO, Mariel, 33211 GIJÓN (ES); FERNÁNDEZ CAMERO, José Antonio, 33211 GIJÓN (ES)
(74) Representative: Ungria López, Javier
(86) International application number: PCT/ES2019/070773
(87) International publication number: WO 2020/099707

(56) References cited:
- EP-A1- 3 725 524
- WO-A1-2017/051029
- CN-A- 107 877 863
- FR-A1- 3 046 093
- US-A1- 2017 190 120
- US-A1- 2017 246 808

## Description

### PURPOSE OF THE INVENTION

The present invention is included within the sector of additive manufacturing, more specifically, of techniques to manufacture via a continuous automated system with loading and ejection of platforms for additive manufacturing with both polymers as well as metals and other sinterable or bakeable materials. More specifically, the object of the invention is a machine and an automated additive manufacturing system.

### BACKGROUND OF THE INVENTION

When a process of additive manufacturing is carried out, a manufacturing platform is manually prepared, such that, when the production process of the object is completed, the manufacturing platform is removed manually for the preparation of a new print. There is, therefore, a need to automatically prepare the manufacturing platforms for the continuous production of part batches.

The document US2018117844A1 reports the solution of a 3D printing machine that comprises a loader which stores a number of stacked manufacturing platforms, comprises an actuator that pushes up the corresponding manufacturing platform to automatically load the manufacturing platforms, comprises a locking element that secures the position of the platform during the manufacturing operation, and comprises another actuator that ejects the platform. Specifically, it describes a loading system of platforms that is located within the printing machine, and that pushes up the manufacturing platform, which does not allow the independent heating of the platforms, and, also, each loader is only capable of feeding a single printer. The document FR 3046093 relates to an automated and confined additive manufacturing facility. The facility comprises a confinement chamber inside which a plurality of additive manufacturing machines are installed, each machine comprising a manufacturing chamber, the facility further comprising, inside the confinement chamber, a supply device and a supply circuit for supplying an additive manufacturing powder to the different machines in the facility, a conveying device for conveying additive manufacturing container/tray assemblies and comprising at least one conveying chamber circulating between the different machines, and a cleaning device comprising at least one cleaning chamber for cleaning automatically and in a confined manner the additive manufacturing trays in the cleaning chamber.

### DESCRIPTION OF THE INVENTION

The present invention describes a machine and an automated additive manufacturing system in which the loader is external to the robotic arm so that the manufacturing platform can be loaded laterally into the robotic arm. Its location outside the arm allows the integration of a heating system inside the robot to heat the manufacturing platform when the platform is loaded, giving rise to the possibility of printing in different materials such as technical polymers, metals, and ceramics; furthermore, having the loading system exterior to the robotic arm, one single loader could feed several robotic arms of adjacent printers. Also, when the loader is outside the robotic arm, the platforms may be ordered in other arrangements such as in a vertical storage area that can have manufacturing platforms prepared in different materials, from tempered glass to metallic materials, such as molybdenum, depending on the material requirements of the piece to manufacture.

The invention is set out in the appended set of claims

### DESCRIPTION OF THE DRAWINGS

To complement the present description, and to help to better understand the characteristics of the invention according to a preferred practical embodiment thereof, the said description is accompanied, as an integral part thereof, by a set of drawings where the following has been represented in an illustrative and non-limiting manner:
Figure 1A.- Shows a schematic plan of an automated additive manufacturing system according to the present invention.
Figure 1B. - Shows a detailed plan of an extraction module for manufactured parts that is part of the invention system.
Figure 1C.- Shows a detailed plan of the storage/deposit of manufacturing platforms that forms part of the invention system.
Figure 1D.- Shows a front view detail of a storage module that includes the deposit in Figure 1C.
Figure 1E.- Shows a detailed plan of a cleaning module that is part of the invention system.
Figure 1F.- Shows a detailed plan of a chemical module that is part of the invention system.
Figure 2A.- Shows the diagram of an automated additive manufacturing machine.
Figure 2B.- Shows a detailed plan of a print module that is part of the invention system.
Figure 3A.- Shows a flow diagram of an automated additive manufacturing machine.
Figure 3B.- Shows a detailed plan of a quality control module that is part of the invention system.
Figure 4.- Shows the automation system of an additive manufacturing machine with side loading.
Figure 5.- Shows the method of a simple extrusion system for an additive manufacturing system.
Figure 6.- Shows the method of a double extrusion system for an additive manufacturing system.
Figure 7.- Shows the method of an extrusion system with double nozzles for an additive manufacturing system.
Figure 8.- Shows a hybrid extrusion system for an additive manufacturing system.
Figure 9.- Shows an automated filament loading system for an additive manufacturing machine.
Figure 10.- Shows the drawing of a part requiring supporting structures.
Figure 11.- Shows a flow diagram of the machine and production control software for an automated additive manufacturing system.
Figure 12A.- Shows a detail in perspective of the location of the heating media.
Figure 12B.- Shows a detailed section of the heating media.

### PREFERRED EMBODIMENT OF THE INVENTION

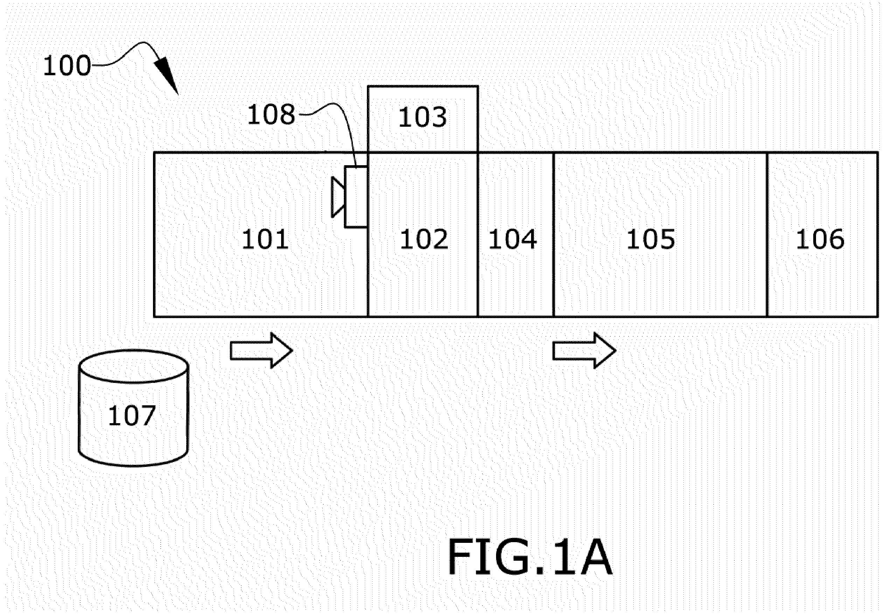

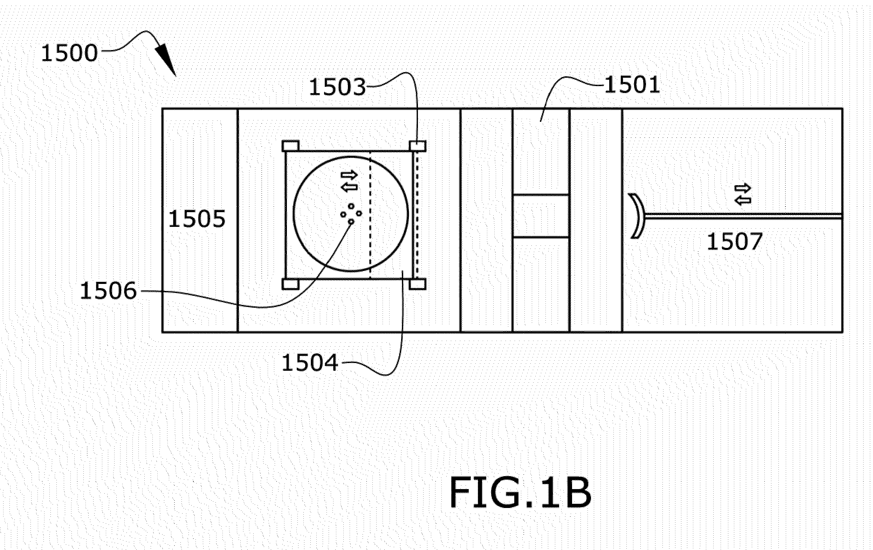

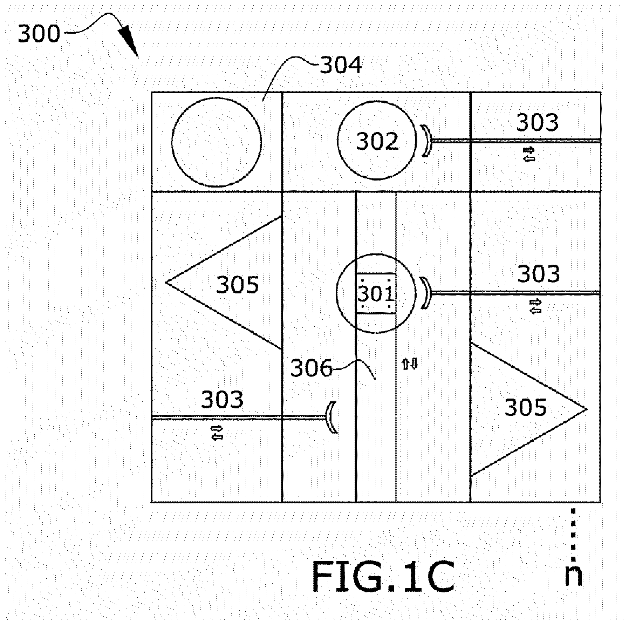

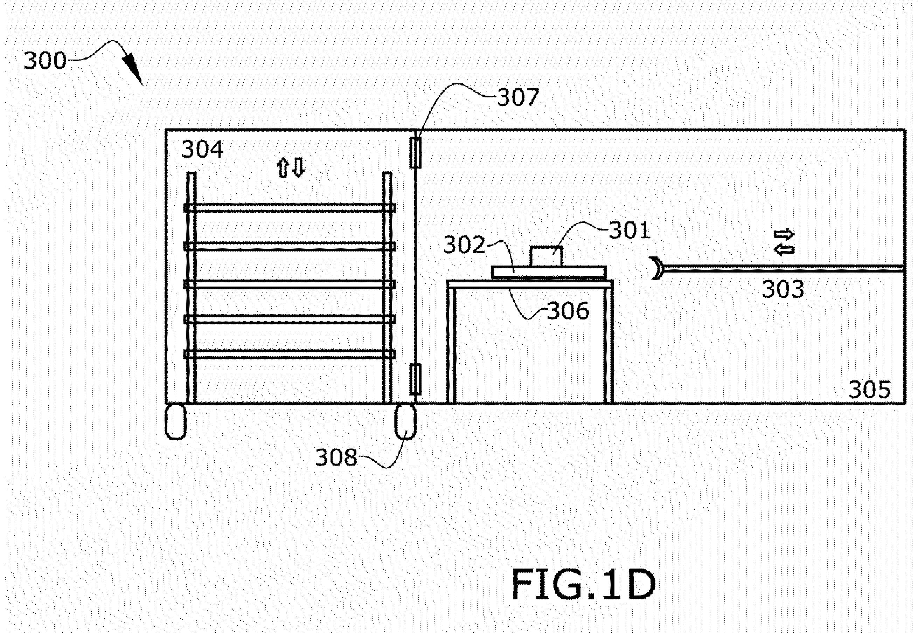

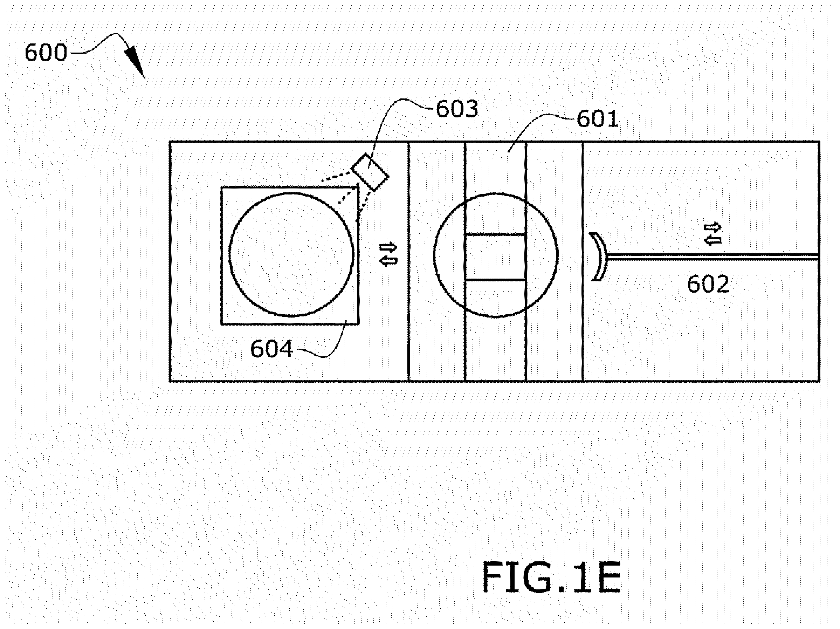

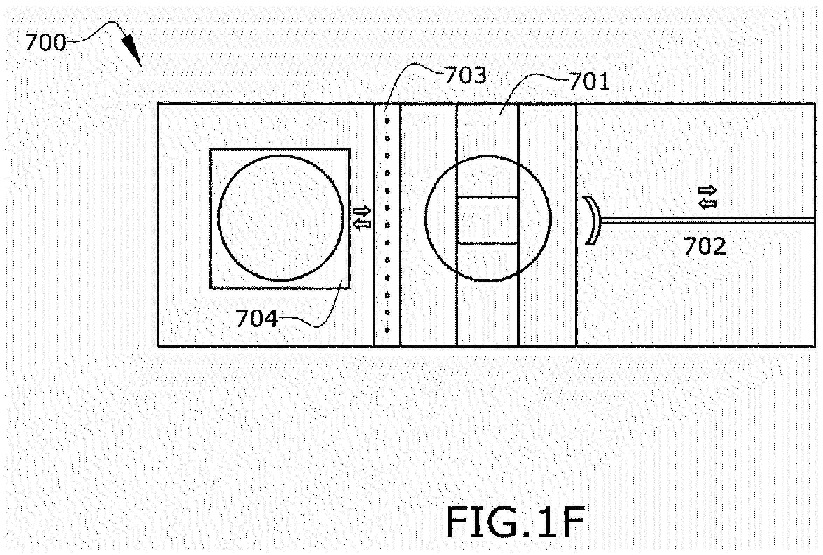

A detailed description is presented hereafter, with the help of the previous Figures 1-12B, of an example of a preferred embodiment of the additive manufacturing system object of the present invention.

Figure 1A shows an operation diagram of an automated additive manufacturing system 100.

The system 100 features: an additive manufacturing machine 101 for the manufacture of parts by means of additive manufacturing, such as, for example, by 3D printers; a parts extraction station 102 to remove parts manufactured in the additive manufacturing machine 101; a station for the expulsion and management of the manufacturing platforms 103; a verification station 104 to revise the manufactured parts; a post-processing station 105; an automatic storage and part reader station 106; a cleaning system (see Figure 1E); a chemical module (see Figure 1F); a software controller 107 to control the manufacturing machine 101 and the production; and a monitoring system 108.

In general, the additive manufacturing machine 101, features a series of monitored manufacturing robots, in parallel, that can be arranged in a number from one to the optimal quantity required in the plant, and that permit the automated manufacturing of batches of parts in metal or polymer through the deposition of material in layers. The additive manufacturing machine 101 includes a filament loading system that provides it with any metallic material that can be extruded and sintered, and of any polymer that can be extruded.

It also includes a material loading system, an automatic loading system of manufacturing platforms, and a system for locking and ejecting the platforms to a central conveyor belt.

The parts extraction station 102 can include various systems to retire the pieces from the corresponding manufacturing platforms; for example, an extraction system by the application of a thermal contrast, application of a liquid element, or a mechanical removal system using blades. Figure 1B shows an extraction module 1500 to remove manufactured parts 1506 with a transport robot 1501, a robotic loading arm 1502, a platform 1504 with a vacuum or suction system, and a deposit 505 for manufactured parts 1506. The robotic loading and unloading arm 1502 introduces the manufactured part 1506 to the printing platform from the transport robot 1501 to the platform 1504, which, in turn, comprises a system of thread or vibratory spatula 1503 which, when heated and vibrates, removes the manufactured part 1506 from the platform 1504 and ejects the manufactured part 1506 to the deposit 1505.

Returning to the Figure 1A, the expulsion and platform management station 103 is composed of a conveyor that transports the manufacturing platforms used by the machine 101 to a storage deposit which includes a reader to track the manufacturing platforms consumed.

The verification station 104 can include any system of sensors and artificial vision to determine the quality of the manufactured part.

The post-processing station 105 can include any system, or a combination of them, to provide different surface finishes to the parts manufactured from any of the fabrication materials; for example, a system of vibratory machines, a system of sandblasting, or any technique that includes chemical finishes.

The automatic storage system and parts reader 106 permits tracking the orders fabricated by the additive manufacturing machine 101 so that the machine and production control software 107 can manage the manufacturing orders according to the orders placed.

The machine and production control software 107 permits planning the work sent to the additive manufacturing machine 101 by means of an algorithm, which software can manage the entry of emergency orders through a dynamic system of queues. The machine and production control software 107 includes a monitoring system 108 that permits the remote control of the machine 101 and its real-time monitoring of each robot and the central conveyor through a system of cameras and sensors.

Figure 1C shows a storage area 300 of manufacturing platforms 302 which can be of different materials, an arm 303, a loader 304, a robotic arm 305, and a transport robot 306. The arm 303 is activated and loads a manufacturing platform 302 from the loader 304 to the transport robot 306, which is responsible for delivering each platform 302 to its corresponding robotic arm 305. The staggered arrangement shown in Figure 1B permits reduction of the machine size 300.

Figure 1D shows in detail that the storage area can be an automatic vertical detachable storage 304. Specifically, a robotic arm for loading and unloading 303 permits the displacement of the platform 302, which contains the printed part 301, to the storage area 304 which, in turn, has an anchoring system 307 that allows the displacement of the storage area 304, once filled, on wheels 308.

The additive manufacturing machine (101) comprises at least one automatic or horizontal storage area (304) configured to accommodate manufacturing platforms (404) in conjunction with a loader, vertically stacked on top of each other or horizontally next to each other.

Figure 1E shows the details of a cleaning module 600, that includes a transport robot 601, a robotic arm for loading and unloading 602, a sprinkler system 603, and a cleaning tank 604. The robotic arm for loading and unloading 602 moves the printing platform from the transport robot 601 to the cleaning tank 604, in which the sprinkler system 603 sprays a cleaning fluid, such as water with solvent/detergent, or similar, that allows cleaning of the printer platform.

Figure 1F illustrates in detail a chemical module 700 with a transport robot 701, a robotic arm for loading and unloading 702, a spray system 703, and an attachment system 704. The robotic arm for loading and unloading 702 moves the printing platform from the transport robot 701 to the attachment system 704, in which the sprinkler system 703 sprays an additive to create an adhesion film on the manufacturing platform so that the part can be adhered as it is being manufactured.

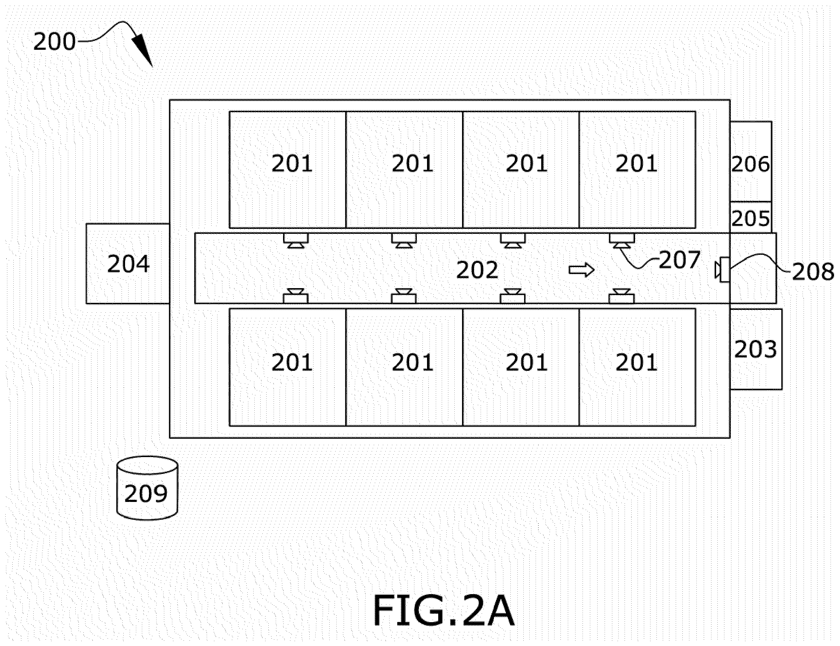

Figure 2A shows the diagram of an automated additive manufacturing machine. The additive manufacturing machine 200 features a number of manufacturing robots 201 that vary in function depending on the machine model, a conveyor 202, an electrical and data system 203, a filtering and temperature control system 204, a machine control system 205, a verification system 206, a robotic vision system 207, a vision system for the conveyor belt 208, and a machine and production control software 209.

The additive manufacturing machine 200 includes an automatic loading system that supplies the manufacturing robot 201 at the side. The manufacturing platforms can be manufactured in tempered glass, ceramic material, or different types of technical polymers. The material supply to the manufacturing robot 201 is done through a system of filament loading, that stores the manufacturing material in a cartridge that can be composed of a coil of any metallic or polymer material suitable for extrusion, using a simple extrusion system (a single nozzle) or multiple extrusion (for example, that could provide two or more manufacturing materials at the same time). This extrusion system is positioned on the printing platform that is fixed by a locking system.

The manufacturing robot 201 is equipped with an expulsion system of the manufacturing platforms 103, that activates a pusher device once the manufacture is terminated and that permits movement of the manufacturing platform to a conveyor 202.

The conveyor belt 202 is automated and monitored by a vision system 208 so that the manufactured parts are detected and verified by the verification system 206, allowing the passage of the manufactured parts to the post-processing station.

The electrical and data system 203 is composed of several independent plates, such as 8, for example, assigned to each robot 201 allowing the connection, configuration, and updating of the machine through the machine control system 205 and the machine and production control software 209.

The filtering and temperature control system 204 is composed of a pre-filter, a treated activated carbon filter and a fibre mesh filter that enables the efficient capture of the fumes and particles produced during the manufacturing process. It incorporates a filter change indicator to maintain a useful life-cycle control of the system, as well as containing a digital flow control system managed by the machine and production control software 209. It also comprises a heat pump system that permits maintenance of stable temperature conditions inside the machine chamber.

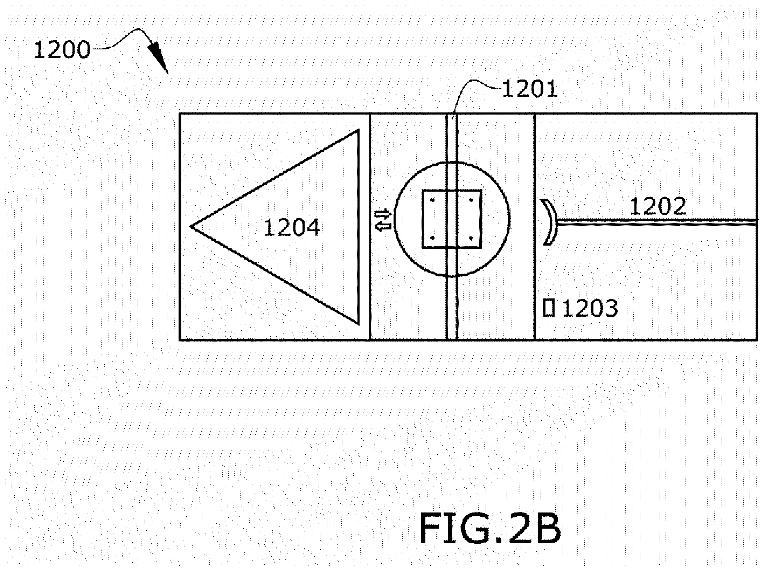

Figure 2B shows the detail of an additive manufacturing machine 1200, specifically of a transport robot 1201, a suction-cup system, a robotic arm for loading and unloading 1202, a position sensor 1203, and a robotic arm 1204. The transport robot 1201 positions a manufacturing platform in front of the robotic arm 1204, according to the indications of the position sensor 1203. Once the manufacturing platform is positioned, the robotic arm for loading and unloading 1202 loads the platform in the robotic arm 1204 and, once the part is printed or manufactured, it unloads the part from the manufacturing platform.

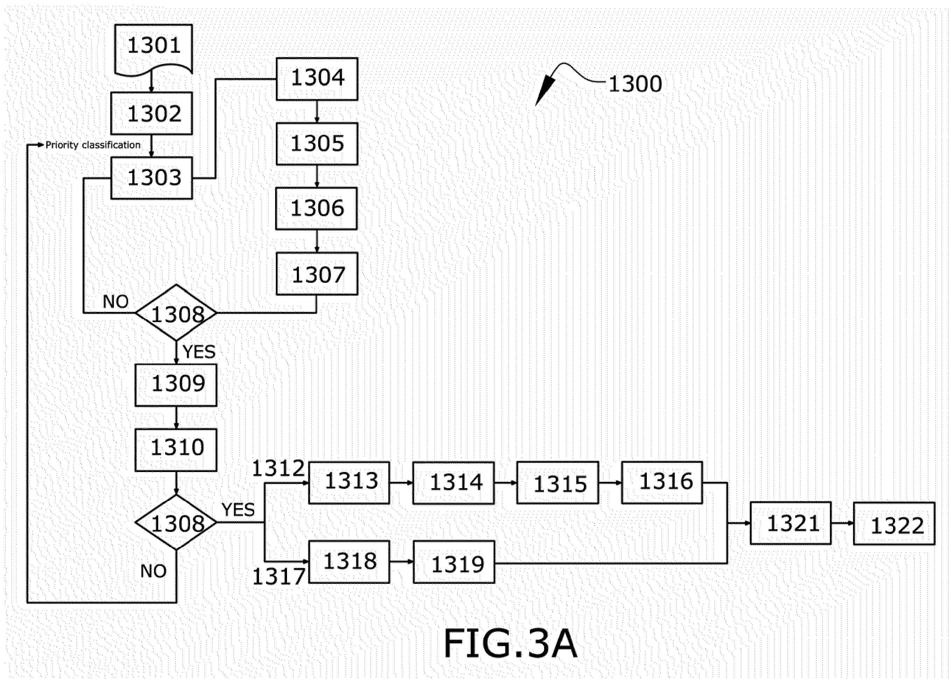

Figure 3A shows the flow diagram of an automated additive manufacturing machine. The system diagram 1300 shows the manufacturing method of the machine. As shown in step 1301, the system 1300 begins with an order that includes a 3D model that is processed by the machine and production control software 1302, classifying the order according to its priority, and executing a shop order 1303 that will be assigned to a specific manufacturing robot.

The shop order 1303, begins with the loading of material 11304 and the lateral loading, as indicated above, of the manufacturing platform 1305 in the corresponding manufacturing robot. When the printer platform reaches its final position, the manufacturing platform is locked on the robot 1306, which lock allows the relative positioning between the manufacturing platform and the extrusion system, permitting the correct fabrication of the corresponding shop order. The shop order 1303 ends with the supply of material in layers 1307 that generate the 3D geometry provided by the CAD model.

Once the shop order has been completed, the manufacturing platform 1309 is unblocked and is ejected, with the manufactured part, to the conveyor 1310; the machine and production control software 1302 verifies 1308 if the manufactured part complies with the fabrication standards established by a system consisting of sensors and artificial vision. If the verification is successful, the manufacturing platform with the part is directed to the post-processing station 1313; if such verification does not comply with the specifications, the platform with the result of the failed shop order is discarded and a new shop order 1303 is executed by the machine and production control software 1302 by assigning the part to whatever manufacturing robot 201 is available.

The manufactured parts that pass the quality control will advance to the post-processing station 1313. If it is a part printed in metal 1312, it must pass through the processes of debinding 1314 and sintering 1315 before going through the processes of retiring the supports and surface finishing 1316. Once the manufactured part is completed, it is stored 1321 and shipped 1322 to the corresponding customer. If, on the contrary, it is a manufactured part printed in polymer 1316, it must pass through the processes of retiring the supports 1318 and the operations of surface finishing 1319, before storage 1321 and shipping 1322 to its corresponding customer.

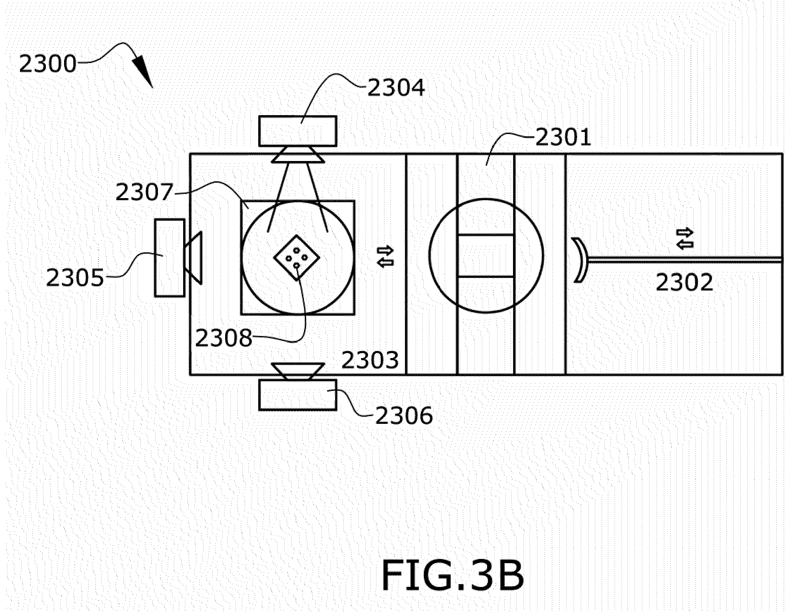

Figure 3B shows in detail the quality control of a manufactured part 2308. A quality control module 2300 is equipped with a transport robot 2301, a robotic arm for loading and unloading 2302, a quality control system 2303, an RV/RA projector 2304, a scanner 2305, a high-resolution camera 2306, and a weight-scale 2307. The robotic arm 2302 introduces the manufactured part 2308 from the transport robot 2301 to the quality control system 2303, where the weigh-scale 2307 weighs the finished part 2308 to control the deposition of material during the manufacturing. The RV/RA projector 2304 projects an image pattern of a finished control part on the manufactured part 2308, which is picked up by the high-resolution camera 2306 to determine if the manufactured part 2308 is dimensionally correct. The 3D Scanner 2305 makes a three-dimensional reproduction of the manufactured part to carry out a comparative dimensional and geometric analysis between the file of the requested part and the manufactured part, as well as to obtain a three-dimensional reproduction of a piece to manufacture of which there is no initial manufacturing file.

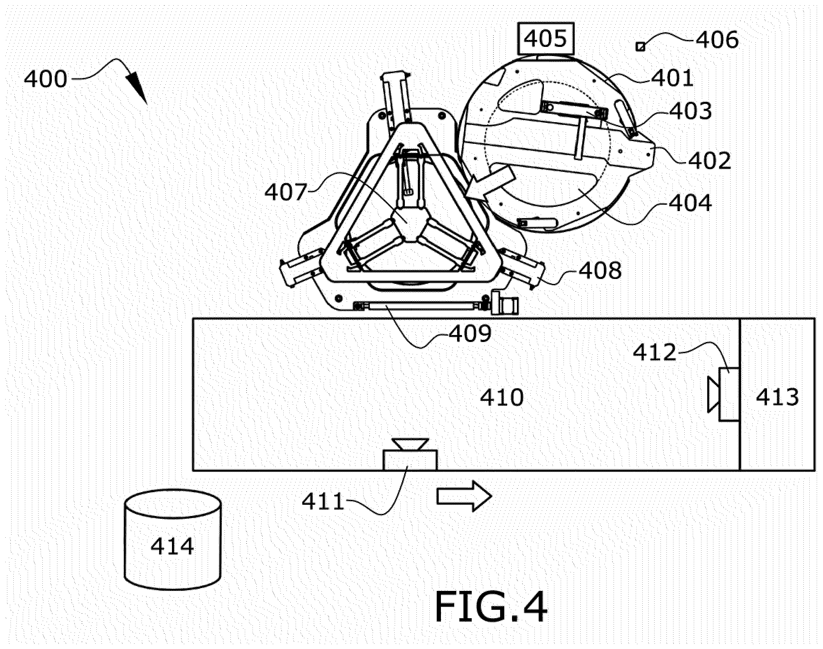

Figure 4 shows an automation system 400 of an additive manufacturing machine 101. The automation system 400 describes the automation method used in the additive manufacturing machine 101. First, the machine 101 is comprised of the loading system 401 of manufacturing platforms 404, which can store up to 50 manufacturing platforms 404 in the platform loader that is located laterally adjacent to the base of each robot. The manufacturing platforms 404 that are waiting to be used are placed in the loading position thanks to a position detector 406 that can include a sensor or similar component, which is synchronised by means of the machine and production control software 414 and causes the manufacturing platform 404 to reach its loading position. Once the manufacturing platform is positioned and is identified by the position detector 406, which is comprised of a sensor or similar, the thrust system 402 is activated, comprising a pusher system (402) that permits loading the manufacturing platform into the base of the manufacturing robot. Once the platform has been loaded, it is locked by a locking system, comprised of a series of actuators, racks, stops or similar, and that is operated by a series of motors or a similar pneumatic system 408.

Secondly, the system 400 is comprised of the filament charging system 405 (which will be described in more detail later) that allows feeding the extrusion system 407 with the manufacturing material corresponding to that shop order.

Once the shop order has been completed, the printing platform 404, with the manufactured part on the printing platform, is unblocked and expelled from the base of the manufacturing robot by the expulsion system 409, which is activated by a motor or pneumatic system 408 and that, by means of a pusher, expels the manufacturing platform to the machine conveyor 410, directing the manufacturing platform to the verification system 413 comprised of sensors and artificial vision 412.

Each one of the manufacturing robots that comprise the system 400, such as the conveyor 410, have a robotic vision system 412 and belt conveyor 410 that, thanks to the machine and production control software 414, permits the real-time and remote monitoring of the machine. The developed loading system can have two different arrangements for loading: side loading, Figure 4, or front loading of the manufacturing platforms, Figure 1A. Figure 4 shows the automation system of an additive manufacturing machine. The heating system is integrated into the base of the robot. The feeding system of the platforms may be arranged in two different ways, with a loading system 401 that feeds the printing robot 407 laterally, Figure 4, that is located adjacent to the base of each robot. The manufacturing platforms 404 that are waiting to be used are placed in the loading position thanks to a position detector 406 that can include a sensor or similar component; the position detector 406 is synchronised by means of the machine and production control software 414 and causes the manufacturing platform 404 to reach its loading position. Once the platform is positioned and identified by the position detector 406, which is comprised of a sensor or similar, the pusher system 402 is activated, comprised of a pusher device, a guide mechanism, actuator, or whatever other system that permits loading the platform into the base of the robot Once the platform has been loaded, it is locked by a locking system, comprised of a series of actuators, racks, stops or similar, and that is operated by a series of motors or a similar pneumatic system 408. For the ejection of the platforms, an expulsion system is used, comprised of a roller or similar rotating system 409 and an actuator, rack, stops or similar that expel the platform to the conveyor belt 410.

Figure 1A shows the arrangement for the front-loading of the manufacturing platforms. The system 100 has a storage area 300 for platforms 302 that can be of different materials, an arm 303, a loader 304, a robotic arm 305, and a transport robot 306.

The robot 103 is a robot that has the capacity to reduce or increase its length thanks to a pneumatic system, electric actuators, mechanical actuators or similar, and which has a series of suction pads at its end, electric actuators or similar, so that when it operates, it extends and loads a platform 302 from the loader 304 to the transport robot 306 that delivers each platform 302 to its corresponding robotic arm 305; once the transport robot 306 is located in front of the robot to be loaded, it stops, and the robot 303 is activated to introduce the platform into the printing robot 305. The robot 303 can move laterally along the whole fabrication system through a system of guides, spindles, actuators or similar that permits the reduction in the number of robots 303 needed to load a series of machines. The staggered arrangement also permits a reduction in the size of the machine.

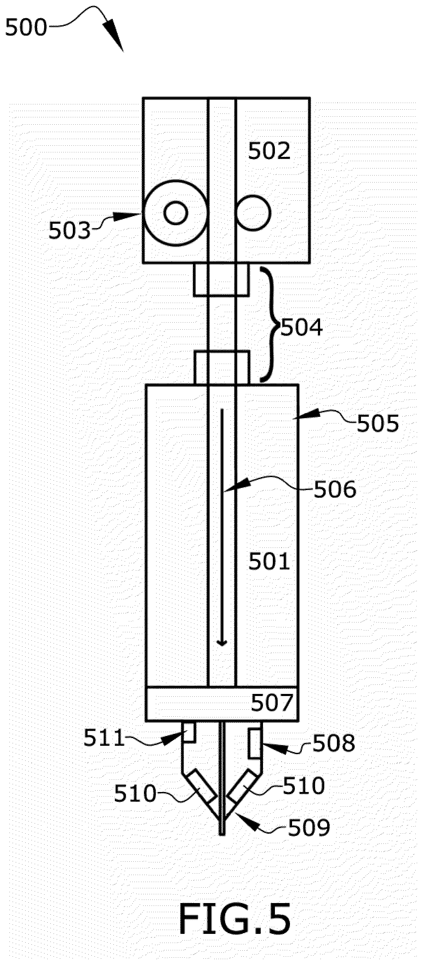

Figure 5 shows the method of a simple extrusion system for an additive manufacturing system. Diagram 500 describes the configuration of a simple extrusion system with a single nozzle 501. The drive system 502 may include a motor, a pneumatic system, or similar to operate the pusher system 503, which can be composed of sprockets, pulleys, or another similar mechanism. Once the manufacturing material 506 is supplied to the robot, the guidance system 504, comprised of a fitting and a tube of low friction coefficient polymer with high thermal resistance, guides it to the nozzle or hotend 501 through the coldend 505. At this point of the system 500, the manufacturing material 506 is in its initial state thanks to a heat sink 507.

Once the manufacturing material 506 is located in the nozzle or hotend 501, a heating system 508, that can employ various components and techniques, heats the manufacturing material 506 to the proper temperature for its delivery through the extrusion nozzle 509.

The temperature management mechanism independently incorporates a ventilation system 510 that permits the proper generation of the layers corresponding to the 3D model.

The correct positioning between the extrusion nozzle 509 and the printing platform is attained through the calibration system 511 that may be comprised of an optical sensor or similar.

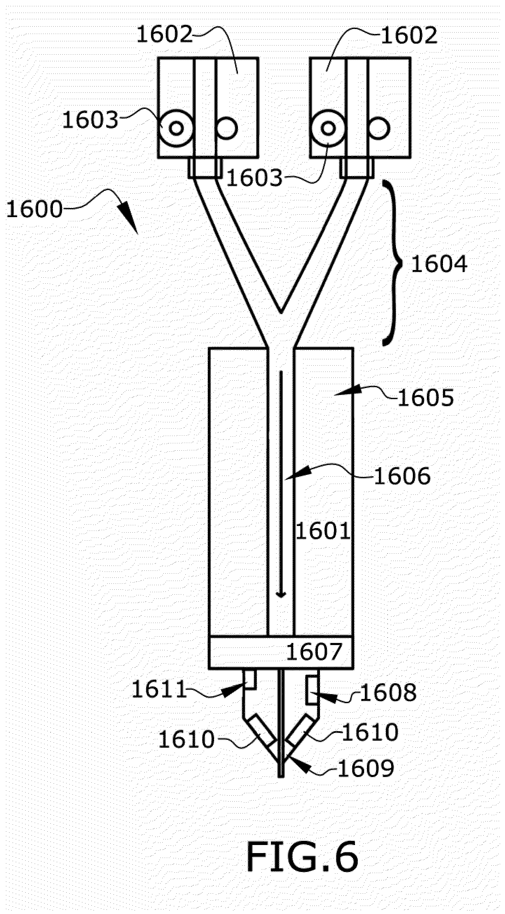

Figure 6 shows the method of a double extrusion system for an additive manufacturing system. Diagram 1600 describes the configuration of a double extrusion system with a single nozzle 1601. The drive system 1602 may include a motor, a pneumatic system, or similar to operate the pusher system 1603, which can be composed of sprockets, pulleys, or another similar mechanism. Once the manufacturing material and the support material 1606 are fed to the robot, the guidance system 1604, comprised of a fitting and a tube of low friction coefficient polymer with high thermal resistance, guides them toward the nozzle or hotend 1601 passing through the coldend 1605. At this point of the system 1600, the manufacturing material and the support material 1606 are in their initial state thanks to a heat sink 1607.

Once the manufacturing material and the support material 1606 are in the nozzle or hotend 1601, a heating system 1608, that can employ various components and techniques, heats the manufacturing material and the support material 1606 to the proper temperature for its double delivery through the extrusion nozzle 1609. The control of this temperature also uses a ventilation system 1610 for the correct generation of layers of the 3D model. The correct positioning between the extrusion nozzle 609 and the printing platform is attained through the calibration system 1611 that may be comprised of an optical sensor or similar.

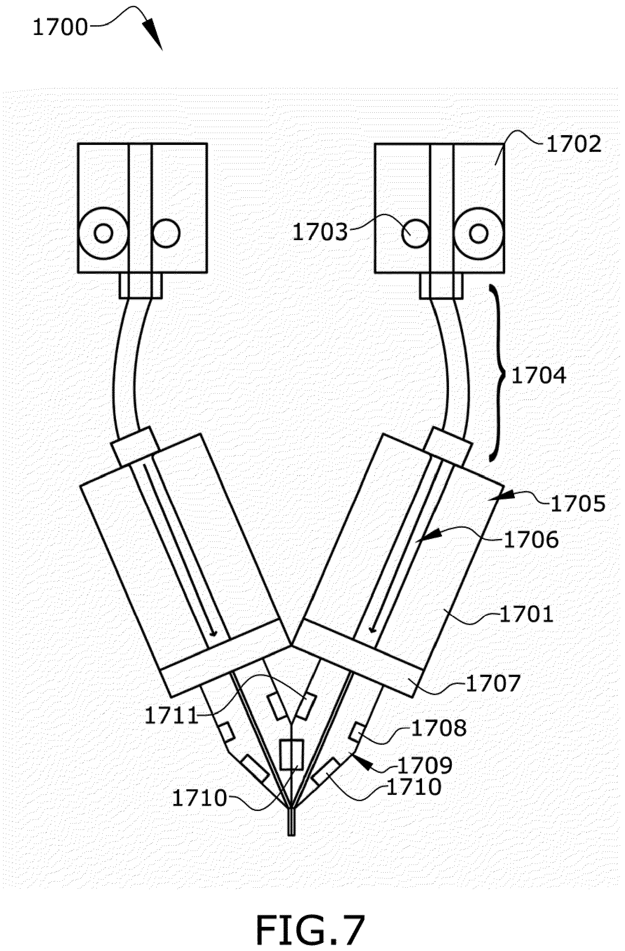

Figure 7 shows the method of extrusion with a double nozzle for an additive manufacturing system. Diagram 1700 describes the configuration of a system of double extrusion with two nozzles 1701. The drive system 1702 may include a motor, a step-by-step pneumatic system, direct current motors, or similar to operate the pusher system 1703 which can be comprised of sprockets, pulleys, or another similar mechanism. Once the manufacturing material and the support material 1706 are fed to the corresponding nozzle, the guidance system 1704, composed of a fitting and a tube of low friction coefficient polymer with high heat resistance, guides it to the nozzle or hotend 1701 passing through the coldend 1705. At this point of the system 1700, the manufacturing material and the support material 1706 are in their initial state thanks to a heat sink 1707. In this case, the support material can be different from the manufacturing material of the part and may be composed of any material (for example, metallic materials, ceramic, glass), for high-temperature support material (which are removed during the sintering process), or soluble materials, or sublimable materials.

Once the manufacturing material and the support material 1706 are in their corresponding nozzles or hotend 1701, a heating system 1708, that can employ various components and techniques, heats the manufacturing material and the support material 1706 to the proper temperature for its double delivery through the extrusion nozzles 1709.

The temperature management mechanism independently incorporates a ventilation system 1710 that permits the proper generation of the layers corresponding to the 3D model.

The correct positioning between the extrusion nozzle 1709 and the printing platform is attained through the calibration system 1711 that may be comprised of an optical sensor or similar.

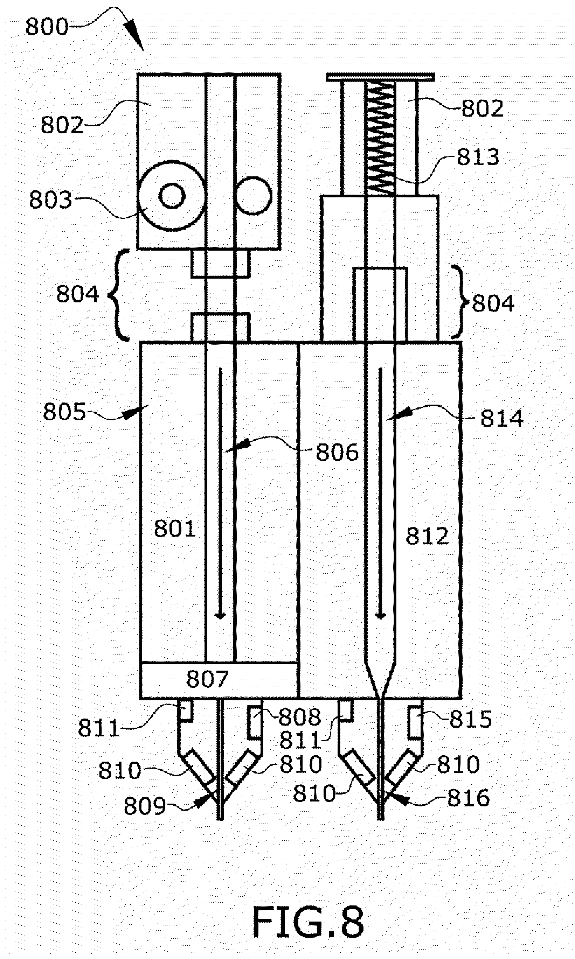

Figure 8 shows a hybrid extrusion system for an additive manufacturing system. Diagram 800 describes the configuration of a hybrid extrusion system comprised of a simple extrusion system described above in Figure 5 and a fluid extrusion system 813. The drive system 802 of both systems can include a motor, a pneumatic system, or similar to operate the pusher system 803 and the fluids return system 814, which may be comprised of sprockets, pulleys, springs, or another similar mechanism.

The fluid 815 is fed into the fluid extrusion system 813 through a guidance system 804 comprised of a fitting and a tube of low friction coefficient polymer with high thermal resistance, which allows it to be fed through the fluid extruder 817 generating the refill or support structures in 3D models whose topology requires it.

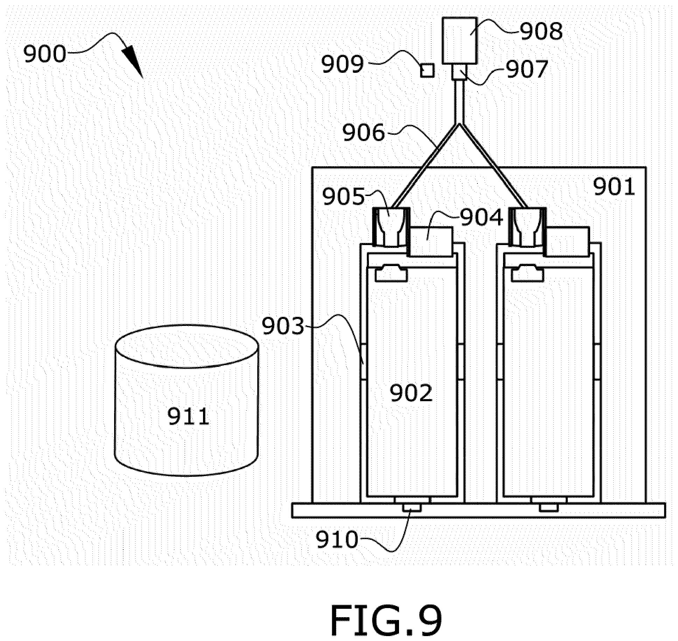

Figure 9 shows an automated filament loading system for an additive manufacturing machine. The described system 900, consists of a loading system 901, comprised of one or more cartridges 902 that contain manufacturing material or support material. When the machine and production control software 911 generates a ticket for loading material, the cartridge 902 must be anchored to the loading space by an attachment system 903 that may be composed of magnets, ball positioners, locking lever, or any similar system to ensure its correct fastening during the material loading.

Once the cartridge 902 is positioned in its corresponding space, the filament is inserted into the loading mechanism 905 which may include two feeder rollers or similar that load the filament when a lever is manually activated, or any other system, thus preventing overlap with the extruder feeding system 908. Once the filament is introduced into the loading mechanism 905, this is fed through a load drive system 904, which may include a step-by-step motor, dc motors, or similar for its activation, and guided through the tube of low friction coefficient polymer with high heat resistance 906 and the fitting 907 to the extruder feeding system 908, thanks to a load sensing system 909, comprised of a sensor or similar, the machine and production control software 911 will know that the manufacturing material has been fed to its corresponding robot.

The charging system 901 is divided into two or more independent compartments containing load cells 910 or any other similar device, which have the function of monitoring the weight of the cartridge 902 so that the machine and production control software 911 can maintain control of the material consumption in each robot.

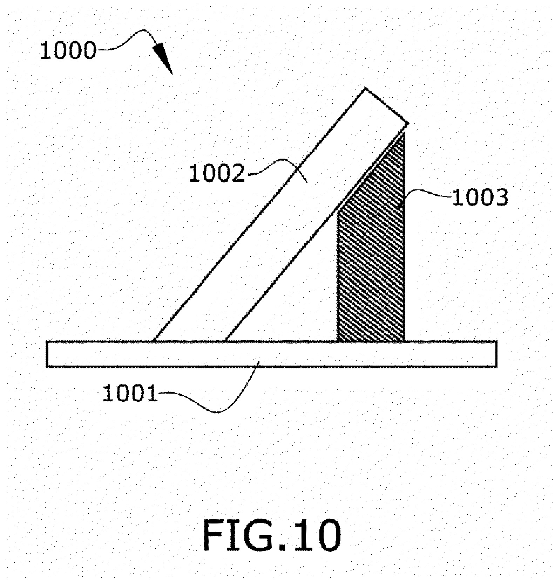

Figure 10 shows the drawing of a part requiring supporting structures. Drawing 1000 shows the manufacture of a part 1002 in any of the materials described above, that, by means of the deposited horizontal layers, creates the three-dimensional topography of the 3D model provided. This part 1002 needs the creation of support structures 1003 to provide vertical support from the manufacturing platform 1001 for its correct generation, as it may contain projections or other topological features that otherwise could not be fabricated by the method of material extrusion. These support structures 1003 may be comprised of any material (for example; metallic materials, ceramic, glass), equal or similar to the manufacturing material of the part 1002; high-temperature support materials (which are removed during in the sintering process) or materials soluble in a liquid or fluid.

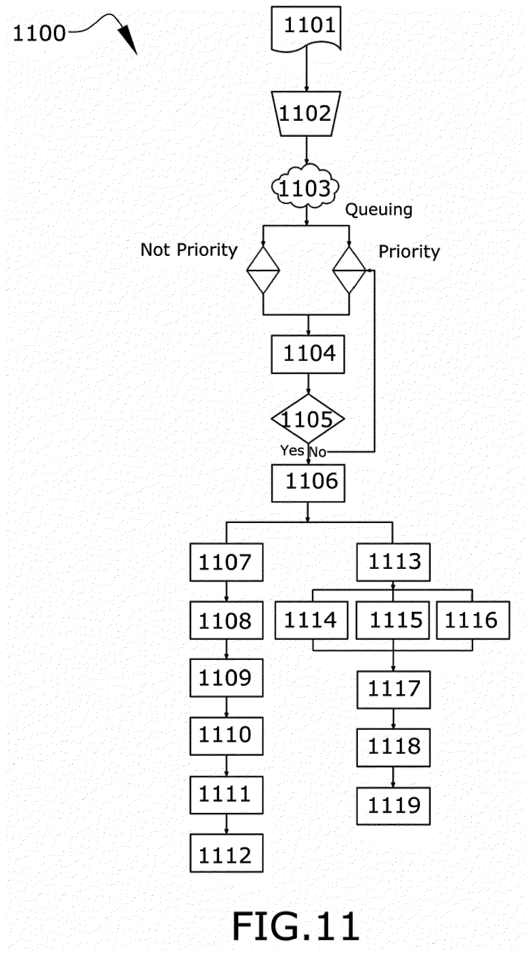

Figure 11 shows a flow diagram of the machine and production control software for an automated additive manufacturing system. The system 1100 begins with the entry of a new order 1101 either on the web or through the commercial department, where the client provides a 3D file, a design, or an idea for its manufacture. Once the budget of the order is approved, the team prepares the design 1102 and generates a GCODE. A new GCODE 1103 enters the system 1100, which then analyses it and assigns it a space in the manufacturing queue, depending on whether it is a priority or not depending on a modified EDD (Earliest Due Date) parameter, and generates the tickets so that the robots have the material loaded when the time comes for its manufacture. Once the corresponding manufacturing robot is ready, the fabrication 1104 of the order is initiated, and, once the part is made, the weight of the manufactured part is verified 1105 with the estimated weight. A quality control QC ticket is generated; if it passes the verification 1105, it is marked as "manufactured" and continues to the corresponding post-processing station 1106; if not, it returns to the queue as a priority RUSH order.

If the part is made of metal 1107, it must pass through the processes of debinding 1108, sintering 1109, removal of supports, and surface finishing 1110 before completion of the final part which will be stored 1111 and shipped 1012 to the corresponding customer.

If the part is made of polymer 1113, it must pass through various processes according to the type of the part and the structural supports that it possesses, that is to say, independent supports of high temperature material 1114, soluble supports 1115, or supports of the same manufacturing material 1116 before completing the final part with surface finishing 1117 which will be stored 1118 and shipped 1119 to the corresponding customer.

As explained above in the views of the figures, the invention permits mass production for 24 hours during 7 days a week with additive manufacturing in metals or polymers and with reduced human participation.

The system of the invention also permits automation for loading, locking, unloading and expulsion of the manufacturing platforms, which facilitates a serial production.

Furthermore, it allows for automation of the loading and unloading of the filament, permitting the feed and weight control of the manufacturing material.

The present invention also permits, through control software, the management of the manufacturing queues, taking into account the urgent requests, minimising the machine downtime, and remotely monitoring the production process.

The invention system is scalable depending on the optimal amount required in the plant so that the number of printing robots can be increased to achieve the estimated unattended production thanks to the machine and production control software.

The system does not require an operator to attend the machine once the piece has been manufactured since both its expulsion and its removal from the manufacturing platform are done automatically.

In more detail, the automated management system of the manufacturing platforms includes a platform loader, which is located in different ways, both adjacent to the base of each of the robots as well as centralised in a general store, which permits the proper feeding of the platforms to the printer robotic arm. The loader has a ball screw system controlled by step motors that are synchronised by an electronic control card and which is responsible for raising the next platform to the loading height once the previous one is expelled after manufacture.

The locking system of the manufacturing platform includes three stops activated by a mechanical locking system and synchronised by the central electronic card similar to the loading system described above. This mechanical system allows for the proper loading of the platform and its subsequent locking before manufacturing. Once the shop order is completed, the platform expulsion system allows the mechanical locking system to move to the open position, triggering an ejector mechanism so that the platform with the manufactured part is expelled to a conveyor belt. The platform with the manufactured part(s) on it is then analysed by a system of sensors and artificial vision to determine the quality of manufacturing.

The automated system for loading and weight control of the raw manufacturing materials includes a loading area composed of one or more material cartridges, an attachment system, a drive and load-sensing system, and a weight control system.

The automated extrusion system is guided by a parallel robot with a system of magnetic swivels. The system contains a double layer ventilation system to facilitate the manufacture of the parts with specific geometric topologies, and also contains a self-calibration system of the robot with the manufacturing platform. The system of heating and temperature control of the extrusion system operates by using a ceramic plate in direct contact with the nozzle and a thermistor that is also located in the nozzle.

It also includes a heat sink to delimit and minimise the transition zone between the two important areas of the extruder, coldend (or cold zone) and hotend (or hot zone). The interior of the extruder, depending on the manufacturing requirements, can accommodate a tube of low friction coefficient polymer with high heat resistance to reduce the friction of the manufacturing material.

The filtering and temperature control system includes a pre-filter, a treated activated carbon filter, and a fibre-mesh filter (HEPA). It also incorporates a filter change indicator to maintain a useful life-cycle control of the system, as well as containing a digital flow control system managed by the machine and production control software. Furthermore, it includes a heat pump system that permits the maintenance of stable temperature conditions inside the machine fabrication chamber.

The machine and production control software use a genetic algorithm that permits the planning of work according to its priority, minimising the delays in production, and monitoring in real-time the manufacturing process through a vision system coupled to each robot and the conveyor belt.

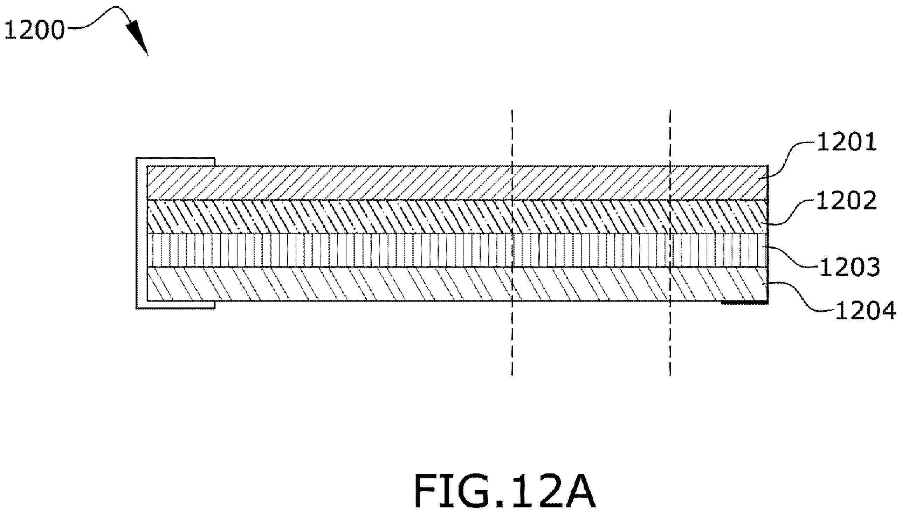

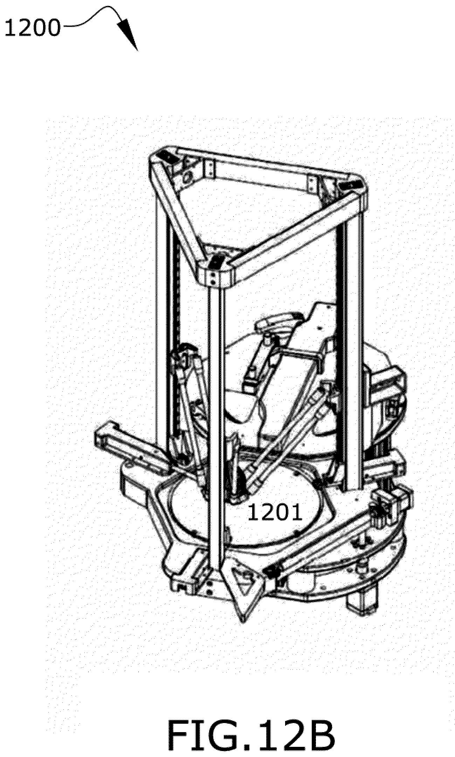

Figures 12A and 12B show the detailled arrangement of the heating devices to heat the manufacturing platforms. The heating devices are attached to the base of each manufacturing robot and comprise a series of elements that permit raising the temperature of, as well as insulating, the manufacturing platform. Preferably, the heating media comprise a plate, as shown in Figure 12A, that includes a set of layers stacked in contact to ensure proper heat transfer. Figure 12B shows a cross-section of the heater system, comprised of a metal platform with a high coefficient of thermal conductivity 902, a heating element 903, and insulation material 904. The manufacturing platform is positioned on this assembly and is fixed when this manufacturing platform is loaded into the printing robot 901 that can be of various temperature resistant components such as tempered glass, ceramic, metal, or flexible material.

## Claims

1. Additive manufacturing machine (101) that comprises:
- at least one manufacturing robot or robots (201), to manufacture parts (1506), by means of additive manufacturing; and
- at least one automatic loading system (401) of manufacturing platform (404) that comprises a position detector (406) and at least one pusher system (402) of manufacturing platforms (404), to feed or provide the at least one manufacturing robot (201) with at least one manufacturing platform (404) intended to support parts during the manufacture, modification of manufactured parts (1506); wherein the loading system (401) is located beside each manufacturing robot or robots 201 and the additive manufacturing machine (101) comprises at least one automatic or horizontal storage area (304) configured to accommodate manufacturing platforms (404) in conjunction with a loader, vertically stacked on top of each other or horizontally next to each other. wherein the manufacturing platforms (404) are placed in the loading position thanks to a position detector (406) that includes a sensor that is synchronized by the machine and production control software (418) and makes the manufacturing platform (404) reaches its loading position, and the machine comprises monitoring or control or guide system (108).

2. Additive manufacturing machine (101), according claim 1, wherein the manufacturing robot or robots also include a heating system to heat the manufacturing platform or other elements of the machine.

3. Additive manufacturing machine (101), according to Claim 2, wherein the heating system (1200) comprises a plate which includes a set of layers stacked in contact to ensure proper heat transfer.

4. Additive manufacturing machine (101), according to Claim 3, wherein the plate comprises the following layers:
- metal platform with high thermal conductivity coefficient (1202),
- heating element (1203), and
- insulation material (1204).

5. Additive manufacturing system, comprising the additive manufacturing machine (101) described in any of the Claims 1-4, wherein it also comprises at least one extraction station of parts or elements (102), to remove the manufactured parts or the manufactured or modified products (1506).

6. Additive manufacturing system, according to any of the Claims 1-5, wherein it also comprises at least one expulsion station 103 to eject the manufacturing platforms (404) .

7. Additive manufacturing system, according to any of the Claims 1-6, wherein it also comprises at least one verification station (104) to verify or check the manufactured parts (1506).

8. Additive manufacturing system, according to any one of the Claims 1-7, wherein it also comprises at least a pre or post-processed station (105) to provide surface finishing or modifying touches to the manufactured parts (1506).

9. Additive manufacturing system, according to any of the Claims 1-8, wherein it also comprises at least one storage station (106) to store, count, or automatically classify manufactured parts (1506).

10. Additive manufacturing system, according to any of the Claims 1-9, **characterised in that** it also comprises at least one cleaning module (600) to clean the manufactured parts (1506).

11. Additive manufacturing system, according to any of the Claims 1-10, wherein it also comprises at least a chemical or physical module (700) for projecting an additive on the manufacturing platforms (404), to create on the manufacturing platforms (404) an adhesive film or bonding film or an element of cohesion.

12. Additive manufacturing system, according to any of the Claims 1-11, wherein it also comprises at least one software and/or hardware control (107) of the production and process machine.

## Patentansprüche

1. Vorrichtung zur additiven Fertigung (101), die aufweist:
- mindestens einen Fertigungsroboter oder mehrere Roboter (201) zur Herstellung von Teilen (1506) mittels additiver Fertigung; und
- mindestens ein automatisches Ladesystem (401) einer Fertigungsplattform (404), das einen Positionsdetektor (406) und mindestens ein Ausdrückersystem (402) von Fertigungsplattformen (404), um dem mindestens einen Fertigungsroboters (201) mindestens eine Fertigungsplattform (404) zuzuführen oder diese bereitzustellen, die zum Halten von Teilen während der Herstellung, Modifizierung von hergestellten Teilen (1506) vorgesehen ist;
wobei das Ladesystem (401) neben jedem Fertigungsroboter oder Robotern (201) angeordnet ist und die Vorrichtung zur additiven Fertigung (101) mindestens einen automatischen oder horizontalen Lagerbereich (304) aufweist, der ausgebildet ist, Fertigungsplattformen (404) in Verbindung mit einer Ladeeinrichtung, die vertikal übereinander gestapelt oder horizontal nebeneinander gestapelt sind, aufzunehmen,
wobei die Fertigungsplattformen (404) mit Hilfe eines Positionsdetektors (406) in der Ladeposition angeordnet werden, der einen Sensor, der durch die Vorrichtungs- und Produktionssteuersoftware (418) synchronisiert ist, aufweist und der veranlasst, dass die Fertigungsplattform (404) ihre Ladeposition erreicht,
und die Vorrichtung ein Überwachungs- oder Steuerungs- oder Führungssystem (108) aufweist.

2. Vorrichtung zur additiven Fertigung (101) nach Anspruch 1, wobei der Fertigungsroboter oder die Roboter ferner ein Heizsystem zum Heizen der Fertigungsplattform oder anderer Elemente der Vorrichtung aufweisen.

3. Vorrichtung zur additiven Fertigung (101) nach Anspruch 2, wobei das Heizsystem (1200) eine Platte aufweist, die eine Gruppe von Schichten enthält, die in Kontakt miteinander gestapelt sind derart, dass eine geeignete Wärmeübertragung sichergestellt ist.

4. Vorrichtung zur additiven Fertigung (101) nach Anspruch 3, wobei die Platte die folgenden Schichten aufweist:
- eine Metallplattform mit hohem Wärmeleitkoeffizienten (1202),
- ein Heizelement (1203) und
- ein Isolationsmaterial (1204).

5. System zur additiven Fertigung, das eine Vorrichtung zur additiven Fertigung (101) nach einem der Ansprüche 1-4 aufweist, wobei ferner mindestens eine Teile- oder Elemente-Extraktionsstation (102) zur Entfernung der gefertigten Teile oder der gefertigten oder modifizierten Produkte (1506) vorgesehen ist.

6. System zur additiven Fertigung nach einem der Ansprüche 1-5, das ferner mindestens eine Auswurfstation (103) zum Auswerfen der Fertigungsplattformen (404) aufweist.

7. System zur additiven Fertigung nach einem der Ansprüche 1-6, das ferner mindestens eine Verifizierungsstation (104) zum Verifizieren oder Prüfen der gefertigten Teile (1506) aufweist.

8. System zur additiven Fertigung nach einem der Ansprüche 1-7, das ferner mindestens eine Vor- oder Nach-Bearbeitungsstation (105) zur Bereitstellung einer Oberflächenendbearbeitung oder modifizierender berührender Einwirkungen auf die gefertigten Teile (1506) aufweist.

9. System zur additiven Fertigung nach einem der Ansprüche 1-8, das ferner mindestens eine Lagerstation (106) zur Lagerung, Zählung oder automatischen Klassifizierung gefertigter Teile (1506) aufweist.

10. System zur additiven Fertigung nach einem der Ansprüche 1-9, **dadurch gekennzeichnet, dass** es ferner mindestens ein Reinigungsmodul (600) zur Reinigung der gefertigten Teile (1506) aufweist.

11. System zur additiven Fertigung nach einem der Ansprüche 1-10, das ferner mindestens ein chemisches oder physikalisches Modul (700) zur Bereitstellung eines Additivs auf den Fertigungsplattformen (404) aufweist, um auf den Fertigungsplattformen (404) eine Haftschicht oder eine Verbindungsschicht oder ein Kohäsionselement zu erzeugen.

12. System zur additiven Fertigung nach einem der Ansprüche 1-11, das ferner mindestens eine Software- und/oder Hardware-Steuerung (107) der Fertigungs- und Verarbeitungsvorrichtung aufweist.

## Revendications

1. Machine de fabrication additive (101) qui comprend :
- au moins un robot ou des robots de fabrication (201), pour fabriquer des pièces (1506), au moyen de fabrication additive ; et
- au moins un système de chargement automatique (401) de plateforme de fabrication (404) qui comprend un détecteur de position (406), et
au moins un système de poussoir (402) de plateformes de fabrication (404), pour alimenter ou fournir le au moins un robot de fabrication (201) avec au moins une plateforme de fabrication (404) prévue pour supporter des pièces pendant la fabrication et/ou la modification de pièces fabriquées (1506);
dans laquelle le système de chargement (401) est positionné à côté de chaque robot ou des robots de fabrication (201) et la machine de fabrication additive (101) comprend au moins une zone de stockage automatique ou horizontale (304) configurée pour loger des plateformes de fabrication (404) conjointement avec un chargeur, verticalement empilées les unes sur les autres ou horizontalement les unes à côté des autres,
dans laquelle les plateformes de fabrication (404) sont placées dans la position de chargement grâce à un détecteur de position (406) qui comprend un capteur qui est synchronisé par la machine et le logiciel de contrôle de production (418) et permet à la plateforme de fabrication (404) d'atteindre sa position de chargement,
et la machine comprend un système de surveillance ou de contrôle ou de guidage (108).

2. Machine de fabrication additive (101) selon la revendication 1, dans laquelle le robot ou les robots de fabrication comprennent également un système de chauffage pour chauffer la plateforme de fabrication ou d'autres éléments de la machine.

3. Machine de fabrication additive (101) selon la revendication 2, dans laquelle le système de chauffage (1200) comprend une plaque qui comprend un ensemble de couches empilées en contact pour garantir un bon transfert de chaleur.

4. Machine de fabrication additive (101) selon la revendication 3, dans laquelle la plaque comprend les couches suivantes :
- une plateforme métallique avec un coefficient de conductivité thermique élevé (1202),
- un élément chauffant (1203), et
- un matériau isolant (1204).

5. Système de fabrication additive comprenant la machine de fabrication additive (101) selon l'une quelconque des revendications 1 à 4, dans lequel il comprend également au moins une station d'extraction de pièces ou d'éléments (102), pour retirer les pièces fabriquées ou les produits fabriqués ou modifiés (1506).

6. Système de fabrication additive selon l'une quelconque des revendications 1 à 5, dans lequel il comprend également au moins une station d'expulsion (103) pour éjecter les plateformes de fabrication (404).

7. Système de fabrication additive selon l'une quelconque des revendications 1 à 6, dans lequel il comprend également au moins une station de vérification (104) pour vérifier ou contrôler les pièces fabriquées (1506).

8. Système de fabrication additive selon l'une quelconque des revendications 1 à 7, dans lequel il comprend également au moins une station de pré-traitement ou de post-traitement (105) pour fournir la finition de surface ou modifier touches des pièces fabriquées (1506).

9. Système de fabrication additive selon l'une quelconque des revendications 1 à 8, dans lequel il comprend également au moins une station de stockage (106) pour stocker, compter ou classer automatiquement des pièces fabriquées (1506).

10. Système de fabrication additive selon l'une quelconque des revendications 1 à 9, **caractérisé en ce qu'**il comprend également au moins un module de nettoyage (600) pour nettoyer les pièces fabriquées (1506).

11. Système de fabrication additive selon l'une quelconque des revendications 1 à 10, dans lequel il comprend également au moins un module chimique ou physique (700) pour projeter un additif sur les plateformes de fabrication (404), afin de créer, sur les plateformes de fabrication (404), un film adhésif ou un film de liaison ou un élément de cohésion.

12. Système de fabrication additive selon l'une quelconque des revendications 1 à 11, dans lequel il comprend également au moins un contrôle logiciel et/ou matériel (107) de la machine de production et de traitement.
